# EUROPEAN PATENT SPECIFICATION

(11) **EP 1 485 748 B1**
(45) Date of publication and mention of the grant of the patent: **18.02.2009**
(21) Application number: 02739206.7
(22) Date of filing: 29.04.2002
(51) Int. Cl.: G02C 1/00, G02C 11/06

(54) **EYEWEAR WITH EXCHANGEABLE TEMPLES HOUSING BLUETOOTH ENABLED APPARATUS**
BRILLE MIT WECHSELBAREN SCHLÄFEN, IN DENEN EINE VORRICHTUNG MIT BLUETOOTH-FÄHIGKEIT UNTERGEBRACHT IST
ARTICLES DE LUNETTERIE A BRANCHES INTERCHANGEABLES HEBERGEANT UN APPAREIL ACTIVE PAR BLUETOOTH

(30) Priority: 30.04.2001 US 845425
(43) Date of publication of application: 15.12.2004
(73) Proprietor: QR Spex, Inc., Tulsa, OK 74114 (US)
(72) Inventor: SWAB, Gregory, Tulsa, OK 74101 (US); GREAVES, Mikal, Mountain View, CA 94041 (US); MILESI, Rolf, Sunnyvale, CA 94085 (US); LIGTENBERG, Christiaan, San Carlos, CA 94070 (US); MEIER, Thomas, San Jose, CA 951251 (US); MALACKOWSKI, James, E., Chicago, IL 60657 (US)
(74) Representative: Wilson Gunn
(86) International application number: PCT/US2002/013681
(87) International publication number: WO 2002/089496

(56) References cited:
- EP-A- 0 840 465
- WO-A-01/06298
- US-A- 4 294 792
- US-A- 5 606 743
- US-A- 5 717 479
- US-A- 6 078 260
- US-A- 6 091 832
- US-B1- 6 311 155
- JAAP C. HAARTSEN ET AL: "Bluetooth - A New Low-Power Radio Interface Providing Short-Range Connectivity" IEEE PROCEEDINGS OF THE IEEE, vol. 8, no. 10, October 2000 (2000-10), pages 1651-1661, XP011044431 New-York, uSA

## Description

### BACKGROUND OF THE INVENTION

### Field of the Invention

The present invention relates to a wireless communication eyewear device having interchangeable temples. More particularly, the invention relates to eyewear having a transceiver enabled with small-range wireless communication technology.

### Description of the Related Art

Many conventional wearable personal apparatus including eyewear, having electrical input-output devices are available to the consumers. Several of these apparatus provide wireless communications using radio frequency or infrared frequency. For example, U.S. Patent No. 6,091,832 discloses a wearable personal apparatus that includes an audio transducer, which may function as an audio input or output device. The audio input or output signals are provided through a wireless system.

U.S. Patent No. 6,091,546 discloses an eyeglass interface system which includes a display assembly and one or more audio and/or video assemblies mounted to an eyeglass frame. The display assembly is mounted to one temple and provides an image to be viewed by the user. The audio or video assembly is mounted on the other temple and is in communication with the display assembly. The audio or video assembly may comprise a camera assembly and/or an audio input or output assembly, such as microphone and/or speakers.. Applications include hands-free telephone, hands-free page, hands-free time display, hands-free blood pressure or vital sign monitoring device, hands-free voice conferencing or hands-free surveillance system. The applications can include voice recognition technology and/or CPS technology utilizing an infrared link or radio frequency (RF) link, or a fiber optic cable.

Additionally, a personal display device built into a frame of eyewear is disclosed at the website of in Viso Inc. and may be found at the following URL address: http://www.inviso.com. The in Visos's eyewear is designed in the shape of sunglasses with the ' built-in personal display device providing a wearer with a view of his/her computer screen. The displayed view is equivalent to a view provided by a 19-inch desktop monitor from a 2.5. feet distance. In order to display the content of the computer screen on the personal display device, however, the in Viso's eyewear has to be plugged into the computer.

WO-A-0106298 discloses eyewear having a frame and a pair of temples in which a micro-optical display is located on a lens of the eyewear. The reference includes embedded in a temple thereof a transceiver, a microprocessor, an antenna, microphone and speakers such that the transceiver is able to communicate with an external processor, communication, control and storage unit which transmits data to the eyewear for display on said micro-optical display. Electrical connection is formed between the microprocessor within the temple and the micro-optical display located in the lens of the frame. In this reference the temples are fixedly secured to the frame.

US-A-5606743 discloses eyewear having a radio receiver, speakers, antennas and a power supply mounted in temples which are attached to a frame. The temples are hingedly connected to the frame and electrical connection is made from one temple to another temple. In this reference a hinge has one portion connected to the frame and another portion integrally formed with each temple. In one disclosed embodiment, electrical contacts also form the hinged pivots and in another embodiment separately provided male and female contacts are provided on the temple and frame respectively which are separate from the hinge. Although in some embodiments of this reference the two portions of the hinge connected to the temples on the one hand and to the frame on the other hand are said to be a snap fit, the temples are not specifically designed to be releasably attached to the frame so that different temples housing different electronic components may be attached to the frame.

### SUMMARY OF THE INVENTION

According to this invention there is provided eyewear as claimed in claim 1 herein.

Preferred features of the invention are defined by the dependent claims.

### BRIEF DESCRIPTION OF DRAWINGS

A full understanding of the invention can be gained from the following description of the preferred embodiments when read in conjunction with the accompanying drawings in which:
Fig. 1 is a schematic representation ofa small-range wireless network formed by connecting an eyewear, constructed in accordance with the present disclosure, to a computer, a bracelet and a wireless telephone;
Fig. 2a is a schematic representation of the eyewear of Fig. 1 showing the removable temples of the eyewear and their connection to an eyewear frame;
Fig. 2b is a diagram of the hinge with the male connector portion extending out before being molded into the temple;
Fig. 2c is a diagram showing the hinge molded into the temple;
Fig. 2d is a diagram showing the spacial relationship of the pin of the hinge and the male connector portion;
Fig. 2e is a diagram showing the hinge, connector and circuitry such a Bluetooth PCB before being molded into the temple;
Fig. 2f is a diagram showing the spacial relationship of the assembly of Fig. 2c in the eyewear;
Fig. 3 is a flow chart of a network formed by the eyewear of the present invention and various communication devices, for example a mobile phone or a two-way radio;
Fig. 4 is a flow chart of a network formed by the eyewear of the present invention and various audio-playing devices such as an MP3 player;
Fig. 5 is a flow chart of a network formed by the eyewear having a camera mounted on its frame and various video-enabled devices, for example, a personal digital assistant (PDA) or a laptop computer;
Fig. 6 is a flow chart of a network formed by the eyewear having a camera mounted on one of its temples and various video-enabled devices, for example, a personal digital assistant (PDA) or a laptop computer;
Fig. 7 is a flow chart of a network formed by the eyewear of the present invention and a telephone conferencing device;
Fig. 8 is a schematic diagram of different components of the eyewear co-molded within the frame and temples of the eyewear;
Fig. 9 is a side perspective view of the eyewear provided with a transceiver and a pair of removable audio speakers;
Fig. 10 is a back perspective view of the eyewear shown in Fig. 8 with one of the speakers being removed from its temple;
Fig. 11 is a front perspective view of the eyewear provided with a digital camera mounted on the frame of the eyewear and a pair of speakers mounted on the temples; and
Fig. 12 is a schematic representation of the eyewear, having a microphone mounted on its temple, and a teleconferencing device being in communication with the eyewear.

### DETAILED DESCRIPTION

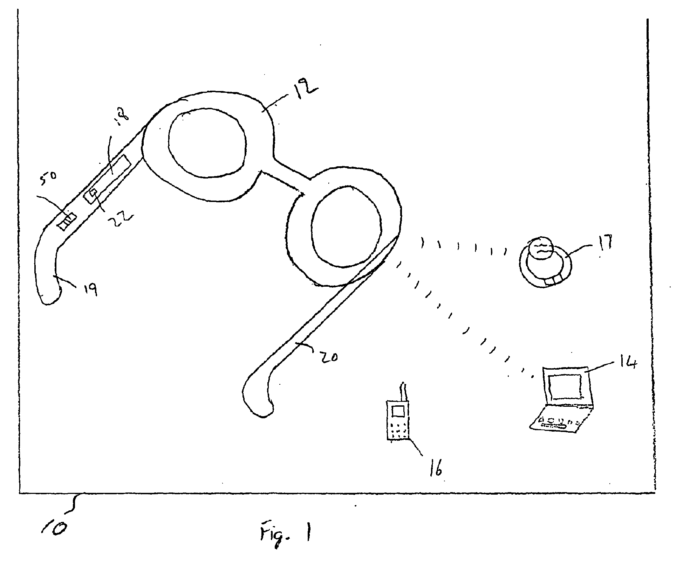

A general concept of the preferred embodiment of the present invention is shown in Fig. 1. In accordance with this embodiment, a wireless network 10 is formed by connecting eyewear 12 with computer 14, bracelet 17 and telephone 16. Eyewear 12 has a transceiver 18 mounted on one of the temples of the eyewear 12 (shown on the temple 19). Computer 14, bracelet 17 and telephone 16, also have similar transceivers, (not shown), mounted on them. When a user of the eyewear 12 comes within a predetermined distance from the above devices, the transceivers of the eyewear and these devices start to communicate to each other thereby creating the ad hoc small-range wireless network 10.

Transceiver 18 is a tiny, inexpensive, short range transceiver that operates on globally available, unlicensed radio band, 2.45 gigahertz(GHz). Transceiver 18 conforms to the Bluetooth standard. Bluetooth is an open specification technology, whose specifications can be obtained from Bluetooth SIG, Inc. or downloaded from the following URL address: http://www.Bluetooth.com. A copy of the Bluetooth Radio Specification is attached to the present specification and is fully incorporated herein. Transceiver 18 can support data speeds of up to 721 kilo-bits per second as well as three voice channels. The transceiver can operate at a lower power level that covers about ten meters and a higher power level which covers about a hundred meters. Transceiver 18 includes a chip 22 that along with software control, allows the user to preset which units transceiver 18 can communicate with. The Bluetooth technology allows transceiver 18 to function even in very noisy radio environments, and be audible under severe conditions, for example, during a thunderstorm.

A connection between the eyewear 12 having the transceiver 18 and one or more of any other devices forms a small range wireless network 10, known as a piconet. Any device in the piconet, including the transceiver, can be configured to be a master, and the rest of the devices will be slaves. A different device may be configured to be the master at a different time, reverting the previous master to be a slave to the newly configured master. Several piconets can be established and linked together ad hoc, and a slave in one piconet can act as a master in another piconet. The clocks of all devices in the piconet are synchronized with the clock of the master. The full-duplex data rate within a multiple piconet structure with ten fully loaded, independent piconets can be more than 6 megabits per second:

Transceivers 18 and transceivers within other devices limit their output power to exactly that actually needed. If the receiving device is only a short distance away, the transceivers modify its signal to suit exact range. Furthermore, the radio automatically shrifts to a low-power mode when traffic volume becomes low or stops. The low-power mode is interrupted by very short signal, with the purpose of verifying the established connection. Bluetooth enabled devices may have four modes of operation in a connection state. The four modes, in increasing order of power consumption are part, hold, sniff and active. Thus, the power consumption of Bluetooth enabled devices is less than three percent of the power consumption of a mobile phone.

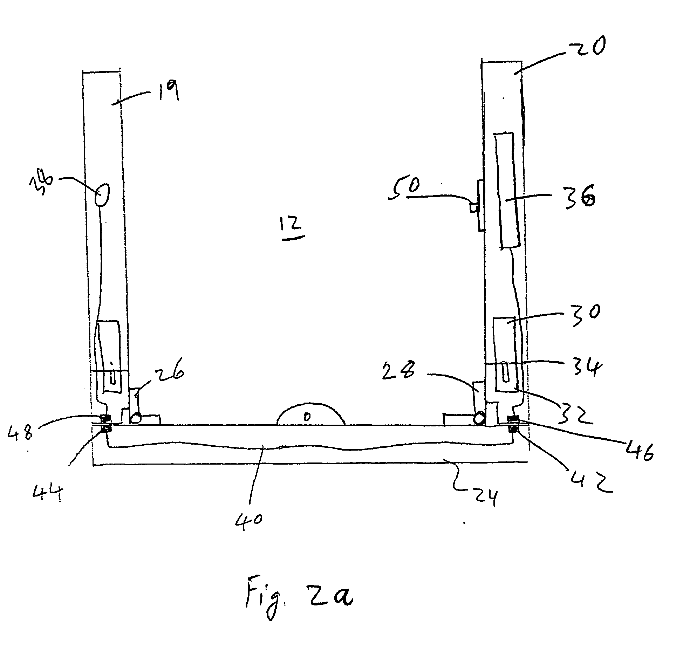

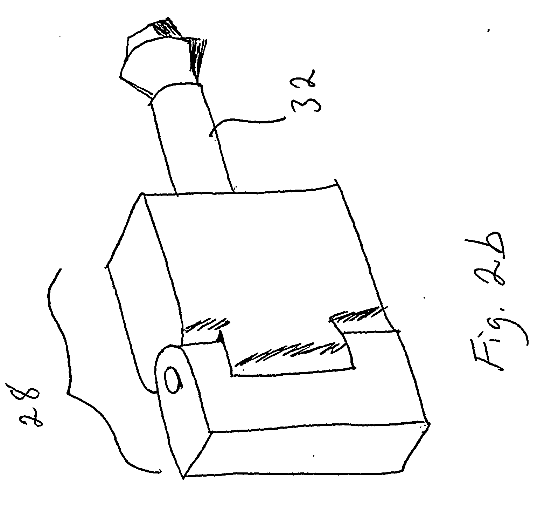

Shown in Fig. 2a is a schematic representation of eyewear 12 of Fig. 1. Eyewear 12 includes a frame 24, and connected to frame 24 are two temples 19 and 20. Temples 19 and 20 are connected to frame 24 via hinges 26 and 28, respectively. Although hinges 26 and 28 are shown to be adjacent to and separate from connector portions of the eyewear, if should be appreciated that this is done for illustration purposes only. As discussed further with respect to Figs. 2b-2f, in the preferred embodiment of the present invention each hinge is integral with one portion (either male or female) of the corresponding connector. Temples If and 20 each have a male portion 30 of a connector 34, for example, a one-eighth-inch audio connector, incorporated in it. Female portion 32 of connector 34 is made integral with hinges 26 and 28. As it is evident to one skilled in the art, amounting positions of male portion 30 and female portion 32 may be reversed, as shown for example in Figs. 2b-2f. When male portion 30 is inserted in female portion 32, temple 20 is attached to frame 24. Temple 19 is also attached to name 24 in a similar manner. Temples 19 and 20 can be removed by pulling the connection apart, and a different temple having a different apparatus within it can be inserted in place of temples 19 or 20. Temples 19 and 20 when attached to frame 24 substantially hide hinges 26 and 28, thereby making eyewear 12 esthetically better. A patent application filed by Gregg T. Swab, entitled "Exchangeable Eyeglass Temple Pieces Utilizing Quick-Connect Attachment" Serial No. 09/53.2,427, describes temple pieces with quick-connect attachment for quick attachment and removal of the temple pieces to the frame.

Frame 24 has pads 42 and 44 located near hinges 28 and 26, respectively. Temples 20 and 19 also have pads 46 and 48 which contact pads 42 and 44 respectively when temples 20 and 19 are in open position. The pads, when in contact, complete the electrical path thereby activating the circuits of apparatus 36. Alternatively, a switch 50 may be located on temples 19 or 20 to activate the circuits.

The connected hinge which permits electrical conduction between the both temples and the frame enables the sharing of fuctionality between the left and right temples. It further enables the battery and the circuitry such as the Bluetooth PCB to be on opposing sides to accommodate more circuitry and their functions and to balance the weight and volume. The hinge enables dual mono or stereo speakers and can accommodate USB devices such as a digital camera.

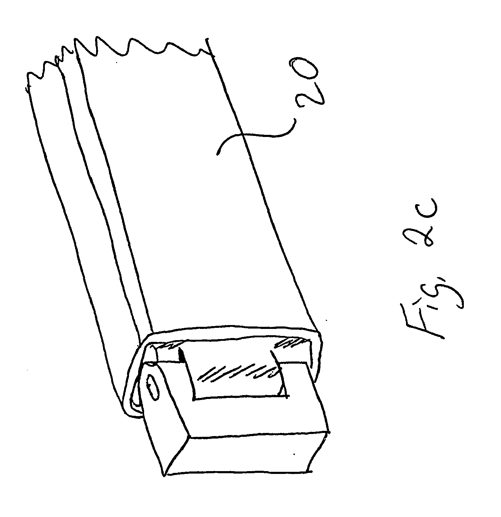

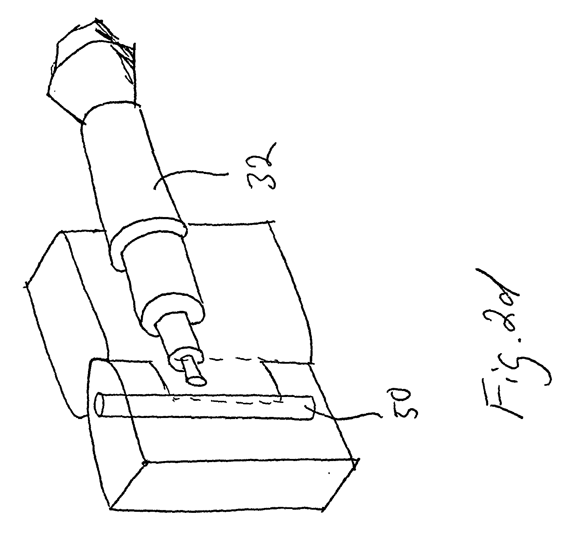

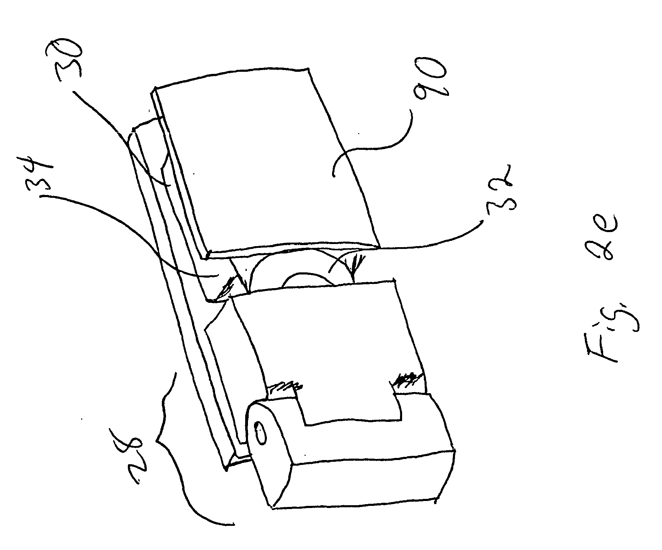

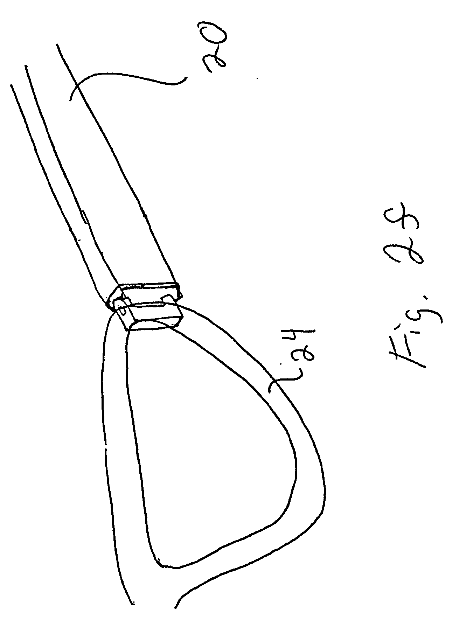

Fig. 2b is a diagram of the hinge (an embodiment of 26 or 28) with male connector portion 32 extending out before being molded into the temple 19,20. Fig. 2c is a diagram showing the hinge molded into the temple. Fig. 2d is a diagram showing the spacial relationship of the pin 150 of the hinge and the male connector portion 32. Fig. 2e is a diagram showing the hinge, connector 34 and circuitry 90 such a Bluetooth PCB before being molded into the temple. Fig. 2f is a diagram showing the spacial relationship of the assembly of Fig. 2c in the eyewear.

Temple 20 has co-molded within its body, an apparatus 36. Apparatus 36 can be, for example, an audio device, a camera, a speaker, a microphone, and a display device such as a liquid crystal or an alarm. The apparatus includes electrical circuitry for operation in an electronics package such as a Bluetooth module with PCB. A battery 38, can be co-molded within temple 20 or 19 and connected to the co-molded apparatus 36 via co-molded conductors 40.

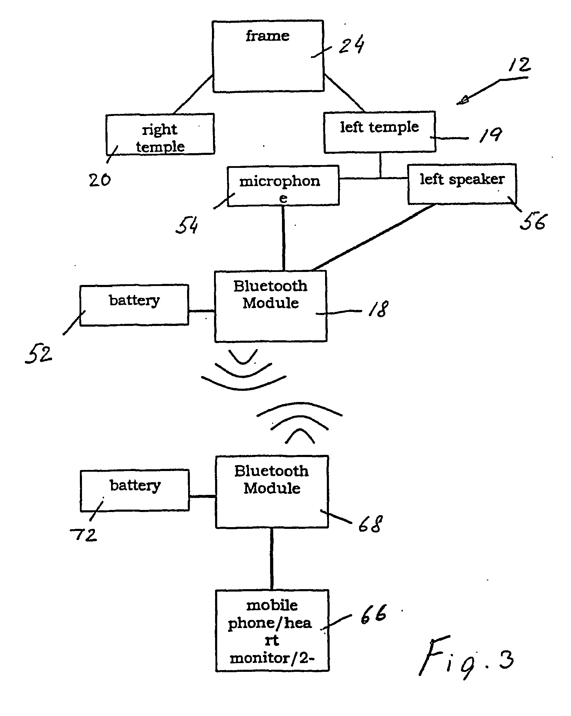

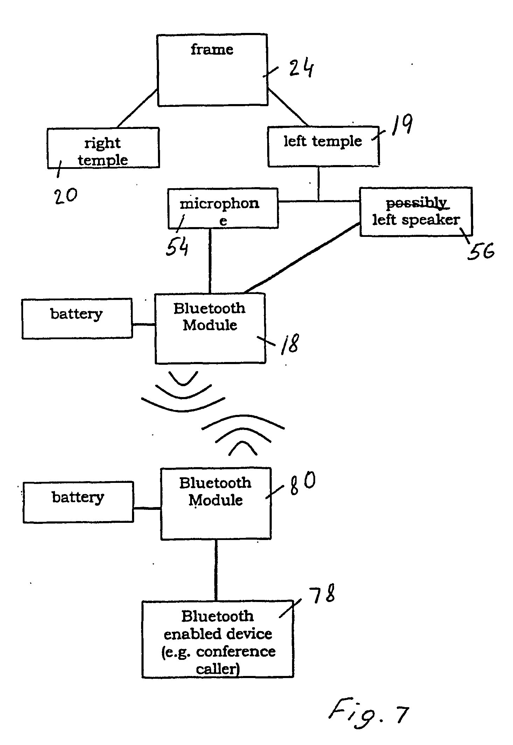

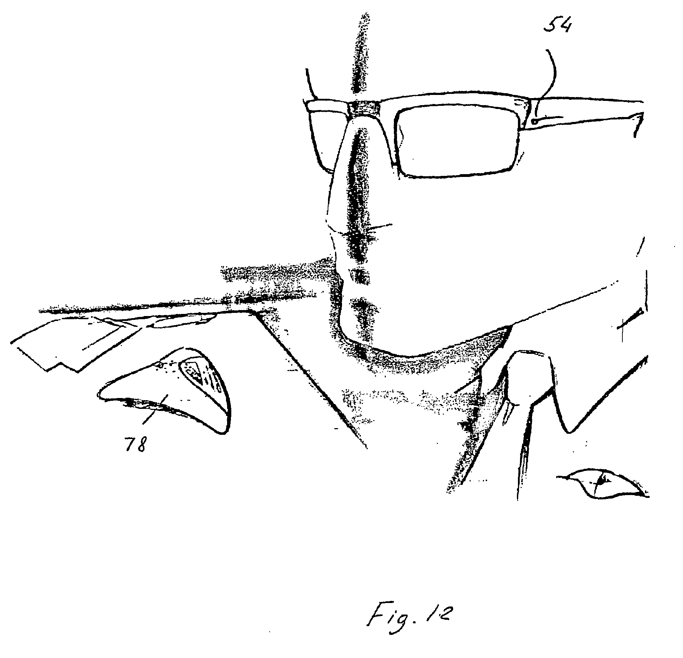

Other devices, such as a radio, a CD player, a hand held global positioning satellite system and a heart rate monitor, having their own transceivers similar to the transceiver 18, can also be connected to the eyewear 12. As shown in the flow-chart of Fig. 3, in one ' embodiment of the present invention, the eyewear 12, having the transceiver 18, battery 52, microphone 54 and speaker 56 molded into one of its temples, is connected to a mobile phone, a heart rate monitor or a two-way radio, represented in the flow-chart as one box 66. All of these connected devices are equipped with their own transceivers 68, similar to the transceiver 18, and each transceiver is powered by a battery 72. Since mobile phones, heart-rate monitors and two-way radios are typically battery operated, no additional power source is required to power transceivers 68. A signal, for example audio information generated by the wearer of the eyewear 12, is transmitted through the microphone 54 and transceiver 18 to the transceiver 68 associated with the intended recipient device, which device, upon receipt of the signal, performs a desired action, for example further conveys the received audio information. A similar embodiment of the present invention is shown in Figs. 7 and 12 where the eyewear 12 is utilized in connection with telephone conferencing equipment 78. The transceiver 18 of the eyewear 12 is then coupled to the transceiver 80 of the telephone conferencing equipment 78 for transmission/receipt of communication signals. This embodiment of the present invention may also be utilized together with a digital camera, as described more fully below, for video conferencing.

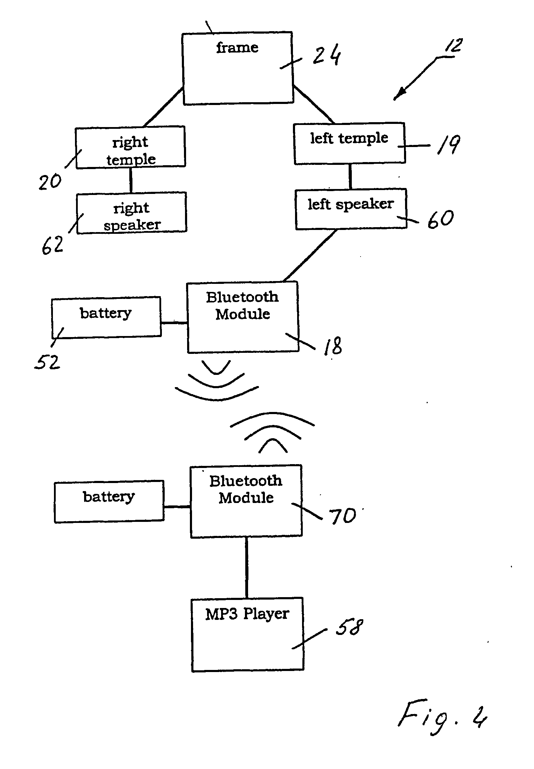

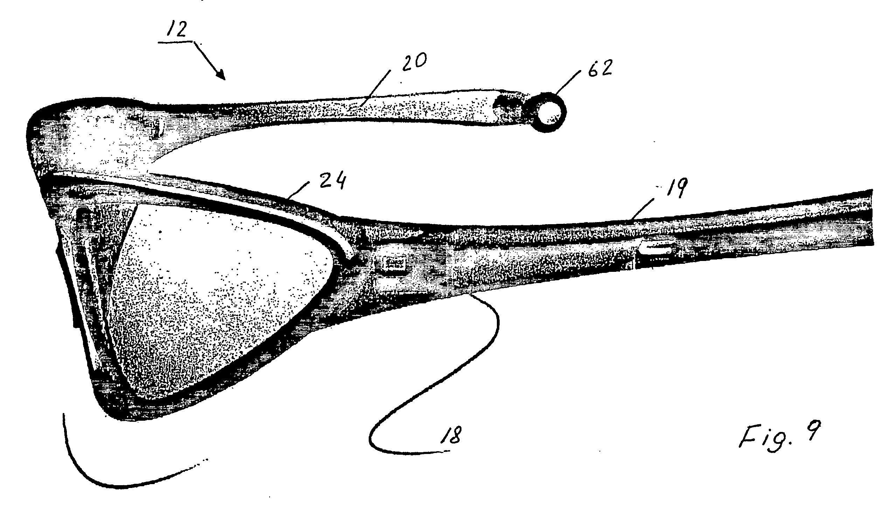

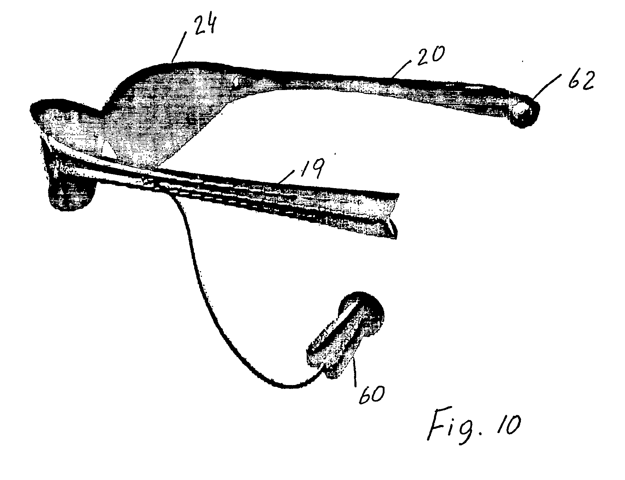

In another embodiment of the present invention, the eyewear 12 may be connected to various audio-playing devices, for example, an MP3 audio player 58, through the eyewear transceiver 18 coupled to the MP3 player's transceiver 70, as shown in the flow-chart of Fig. 4. In this embodiment, one speaker is mounted on each temple of the eyewear 12, i.e., a left speaker 60 is mounted on the left temple 19 and a right speaker 62 is mounted on the right temple 20. Preferably, only one speakers (left speakers 60 in Fig. 4) is connected directly to the transceiver 18, the other speaker (right speaker 62 in Fig. 4) is then connected to the first speaker through the electrically conductive connection of the two temples and the frame. Similarly to the above described embodiment, the MP3 player 58 is equipped with its own transceiver 70 capable of exchanging signals with the transceiver 18. In operation, when MP3 player plays back previously stored music or any other stored audio signal, the transceiver 70 feeds this signal to the transceiver 18 which, in turn, conveys the signal to the sneakers 60 and 62. This embodiment of the present invention is further illustrated in Figs. 9-10 showing the eyewear 12 having the transceiver 18 molded into the left temple 19, the left speakers 60 removably mounted on the left temple 19 and the right speaker 62 removably mounted on the right temple 20. Left temple 19, frame 24 and right temple 20 form an electrically conductive link connecting the right speaker 62 to the left speaker 60.

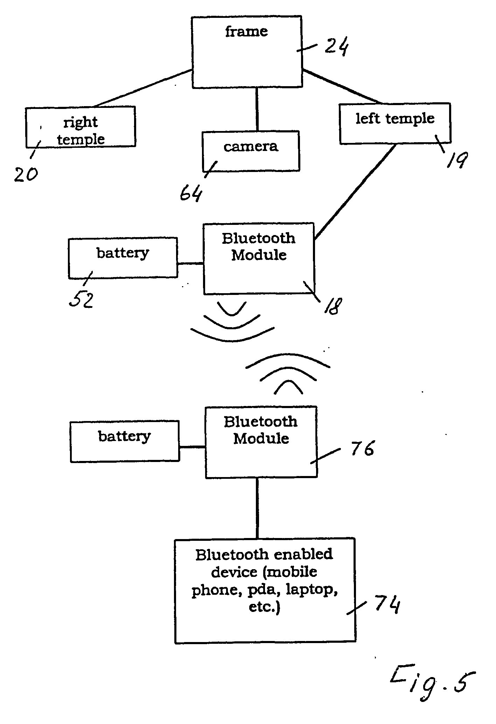

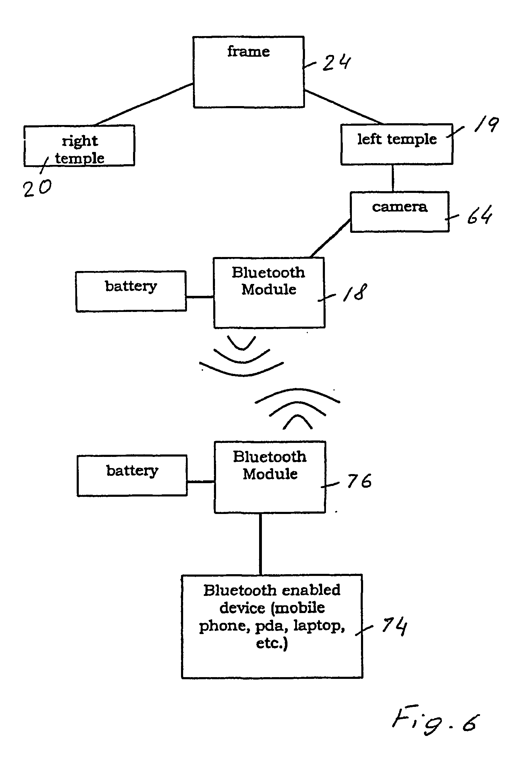

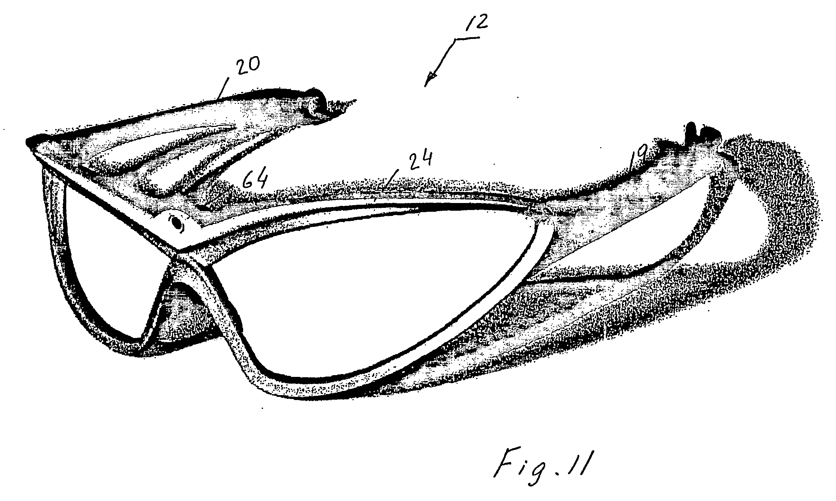

Various video or photo-enabled devices 74, such as a laptop, personal digital assistant (PDA), mobile phone or others, can also be connected to the eyewear 12, as shown in the flow-chart of Fig. 5. In this embodiment, a small digital camera 64 is mounted on the frame 24 of the eyewear 12, as shown for example in Fig. 11. Camera 64 can preferably take digital still pictures as well as video images and transmit them through the transceiver 18 to one or several transceivers 76 of the connected devices 74. If camera 64 is provided with software, such software may be stored on one of the connected devices 74, for example the laptop computer. It is possible then to control camera 64 by transmitting commands, issued from the laptop computer, through the laptop's transceiver 76 to the eyewear's transceiver 18, which then conveys the commands to the camera for fulfillment. This embodiment may be particularly useful if utilized together with the child's alarm system described below. In the described embodiment, the electrically conductive connection of the two temples and the frame is necessary in order for the signal to be conveyed to and from the connected devices. However, if such connection is not desirable, camera 64 may be located on the same temple, for example temple 19, with the transceiver 18. An electrical connection link between the camera and the transceiver may then be embodied within the single temple, as shown in the flow-chart of Fig. 6.

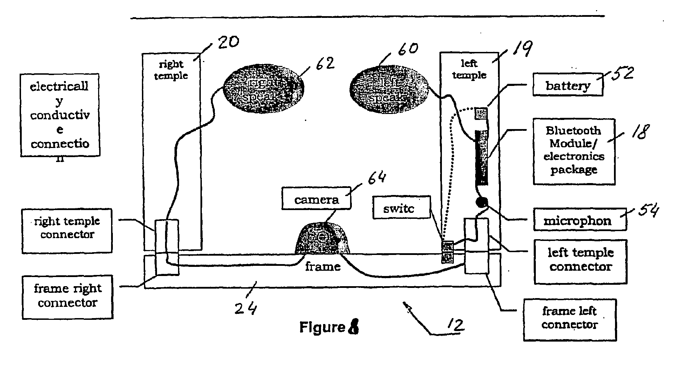

Fig. 8 illustrates a possible combination of the eyewear components described in the previous embodiments. As described above, the eyewear comprises the frame 24 and two temples: left temple 19 and right temple 20. Frame 24 preferably houses the camera 64 for taking video images and still photographs. Right temple 20 preferably houses a removable right speaker 62. Left temple 19 preferably houses a removable left speaker 60, microphone 54, transceiver 18 and battery 52. When the eyewear 12 is open, as shown in Fig. 8, the electrical circuit of the conductive connection between all the components is closed, thereby enabling battery 52 to power all of the components located on the frame and the opposite temple.

In another embodiment, eyewear 12 worn for example by an adult, comprises a distance alarm monitor to supervise the movement of a child. In this embodiment, a device, preferably in the form of a bracelet 17 equipped with its own short-range transceiver (see Fig. 1), is worn by the child. Transceiver 18 in the eyewear and transceiver in the bracelet 17 form a small-range wireless network, wherein the eyewear and the bracelet communicate with each other using signals conforming to the aforementioned Bluetooth standard. The transceiver 18 in the eyewear 12 is configured to activate the alarm when the distance between the bracelet 17 and the eyewear 18 exceeds a predetermined range. The alarm could be, for example, a video alarm like a red light, or an audio alarm like an audible beep or vibratory alarm. Of course the functions of the eyewear and the bracelet may be reversed, i.e. the bracelet with a distance alarm monitor is worn by the supervising adult and the eyewear with its own transceiver is worn by the child. Alternatively, two pairs of eyewear may be provided, one with an alarm monitor and a controlling transceiver, to be worn by the adult, and another with a controlled transceiver, to be worn by the child.

The invention also includes the methods of manufacturing the eyewear. The eyewear is manufactured in a process to create electrical components contained throughout the entire frames and temples. Electrical components discussed above and electrical conductors are embedded in the temple and frame portions for the purpose of supplying electrical energy to the various components. In one method some or all of the components, including the conductive wires are co-molded into the temples and frames. This is an in-process method where the components are inserted into the temple and frame tools. The mold cycle is started, plastic material, flows into the core and covity of the tool, and the components are permanently set in the rigid temples and frames.

Alternatively, the method of manufacture may be that some or all of the components, including the conductive wires, are assembled into piece parts that make up the temples and frames. The piece parts that make up the temples and frames are designed and injection molded to facilitate easy insertion and assembly of mechanical and electrical components. Further, a combination of the co-molded and assembled components may be used to maximize efficiency.

While particular embodiments of the present invention have been described, it will be apparent to those skilled in the art that changes and modifications may be made without departing from this invention in its broader aspect and, therefore, the appended claims are to encompass Within their scope all such changes and modifications that fall within the scope of this invention.

| **CONTENTS** | | | | |
|---|---|---|---|---|
| **1** | **Scope** | | | **18** |
| **2** | **Frequency Bands and Channel Arrangement** | | | **19** |
| **3** | **Transmitter Characteristics** | | | **20** |
| | 3.1 | MODULATION CHARACTERISTICS | | 21 |
| | 3.2 | SPURIOUS EMISSIONS | | 22 |
| | | 3.2.1 | In-band Spurious Emission | 22 |
| | | 3.2.2 | Out-of-Band Spurious Emission | 23 |
| | 3.3 | RADIO FREQUENCY TOLERANCE | | 23 |
| **4** | **Receiver Characteristics** | | | **24** |
| | 4.1 | ACTUAL SENSITIVITY LEVEL | | 24 |
| | 4.2 | INTERFERENCE PERFORMANCE | | 24 |
| | 4.3 | OUT-OF-BAND BLOCKING | | 25 |
| | 4.4 | INTERMODULATION CHARACTERISTICS | | 25 |
| | 4.5 | MAXIMUM USABLE LEVEL | | 26 |
| | 4.6 | SPURIOUS EMISSIONS | | 26 |
| | 4.7 | RECEIVER SIGNAL STRENGTH INDICATOR (optional) | | 26 |
| | 4.8 | REFERENCE SIGNAL DEFINITION | | 27 |
| **5** | **Appendix A** | | | **28** |
| **6** | **Appendix B** | | | **31** |

### 1 SCOPE

The Bluetooth transceiver is operating in the 2.4 GHz ISM band. This specification defines the requirements for a Bluetooth transceiver operating in this unlicensed band.

Requirements are defined for two reasons:
- Provide compatibility between the radios used in the system
- Define the quality of the system

The Bluetooth transceiver shall fulfil the stated requirements under the operating conditions specified in Appendix A and Appendix B. The Radio parameters must be measured according to the methods described in the RFTest Specification.

This specification is based on the established regulations for Europe, Japan and North America. The standard documents listed below are only for information, and are subject to change or revision at any time.

### Europe (except France and Spain):

Approval Standards: European Telecommunications Standards Institute, ETSI
Documents: ETS 300-328, ETS 300-826
Approval Authority: National Type Approval Authorities

### France:

Approval Standards: La Reglementation en France por les Equipements fonctionnant dans la bande de frequences 2.4 GHz "RLAN-Radio Local Area Network"
Documents: SP/DGPT/ATAS/23, ETS 300-328, ETS 300-826
Approval Authority: Direction Generale des Postes et Telecommunications
Note: A new R&TTE EU Directive will be in effect by March 2000, with consequent effects on the manufacturer's declaration of conformity and free circulation of products within the EU.

### Spain:

Approval Standards: Supplemento Del Numero 164 Del Boletin Oficial Del Estado (Published 10 July 91, Revised 25 June 93)
Documents: ETS 300-328, ETS 300-826
Approval Authority: Cuadro Nacional De Atribucion De Frecuesias

### Japan:

Approval Standards: Association of Radio Industries and Businesses, ARIB
Documents: RCR STD-33A
Approval Authority: Ministry of Post and Telecommunications, MPT
Note: The Japanese rules are in revision. Decisions on the revision will take place in Q2 1999.

### North Americas:

Approval Standards: Federal Communications Commission, FCC, USA
Documents: CFR47, Part 15, Sections 15.205, 15209, 15.247
Approval Standards: Industry Canada, IC, Canada
Documents: GL36
Approval Authority: FCC (USA), Industry Canada (Canada)

### 2 FREQUENCY BANDS AND CHANNEL ARRANGEMENT

The Bluetooth system is operating in the 2.4 GHz ISM (Industrial Scientific Medicine) band. In a vast majority of countries around the world the range of this frequency band is 2400 - 2483.5 MHz. Some countries have however national limitations in the frequency range. In order to comply with these national limitations, special frequency hopping algorithms have been specified for these countries. It should be noted that products implementing the reduced frequency band will not work with products implementing the full band. The products implementing the reduced frequency band must therefore be considered as local versions for a single market. The Bluetooth SIG has launched a campaign to overcome these difficulties and reach total harmonization of the frequency band.

**Table 2.1: Operating frequency bands**

| **Geography** | **Regulatory Range** | **RF Channels** |
|---|---|---|
| USA, Europe and most other countries¹⁾. | 2.400-2.4835 GHz | f=2402+kMHz, k=0,....78 |

| | | |
|---|---|---|
| Note 1. The Bluetooth Specification includes a special frequency hopping pattern to provide provisions for compliance with national limitations like in France. The frequency range for France is 2.4465 - 2.4835 GHz and the corresponding RF channels are f = 2454 + k MHz, k= 0,...,22.. | | |

Channel spacing is 1 MHz. In order to comply with out-of-band regulations in each country, a guard band is used at the lower and upper band edge.

**Table 2.2: Guard Bands**

| **Geography** | **Lower Guard Band** | **Upper Guard Band** |
|---|---|---|
| USA, Europe and most other countries | 2 MHz | 3.5 MHz |

### 3 TRANSMITTER CHARACTERISTICS

The requirements stated in this section are given as power levels at the antenna connector of the equipment. If the equipment does not have a connector, a reference antenna with 0 dBi gain is assumed.

Due to difficulty in measurement accuracy in radiated measurements, it is preferred that systems with an integral antenna provide a temporary antenna connector during type approval.

If transmitting antennas of directional gain greater than 0 dBi are used, the applicable paragraphs in ETSI 300 328 and FCC part 15 must be compensated for.

The equipment is classified into three power classes.

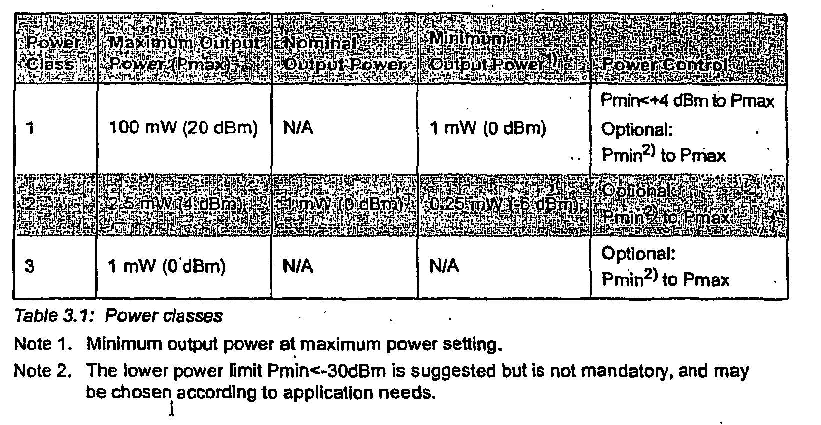

A power control is required for power class 1 equipment. The power control is used for limiting the transmitted power over 0 dBm. Power control capability under 0 dBm is optional and could be used for optimizing the power consumption and overall interference level. The power steps shall form a monotonic sequence, with a maximum step size of 8 dB and a minimum step size of 2 dB. A class 1 equipment with a maximum transmit power of +20 dBm must be able to control its transmit power down to 4 dBm or less.

Equipment with power control capability optimizes the output power in a link with LMP commands (see Link Manager Protocol). It is done by measuring RSSI and report back if the power should be increased or decreased.

Note that power class 1 must not be used for sending packets from one device to another if the deceiving side of a connection does not support the necessary messaging for power control of the sending side (i.e. RSSI measurements and related messages). In this case, the transmitter should comply with the rules of a class 2 or class 3 transmitter.

Also note that if a class 1 device is paging or inquiring very close to another device, the input power could be larger than the requirement in 4.5 Maximum usable level. This can cause the listening device to fail to respond. It is therefore useful to page and inquireas well using transmission according to power class 2 or class 3.

### 3.1 MODULATION CHARACTERISTICS

The Modulation is GFSK (Gaussian Frequency Shift Keying).with a BT=0.5. The Modulation index must be between 0.28 and 0.35. A binary one is represented by a positive frequency deviation, and a binary zero is represented by a negative frequency deviation. The symbol timing shall be better than ±20 ppm.

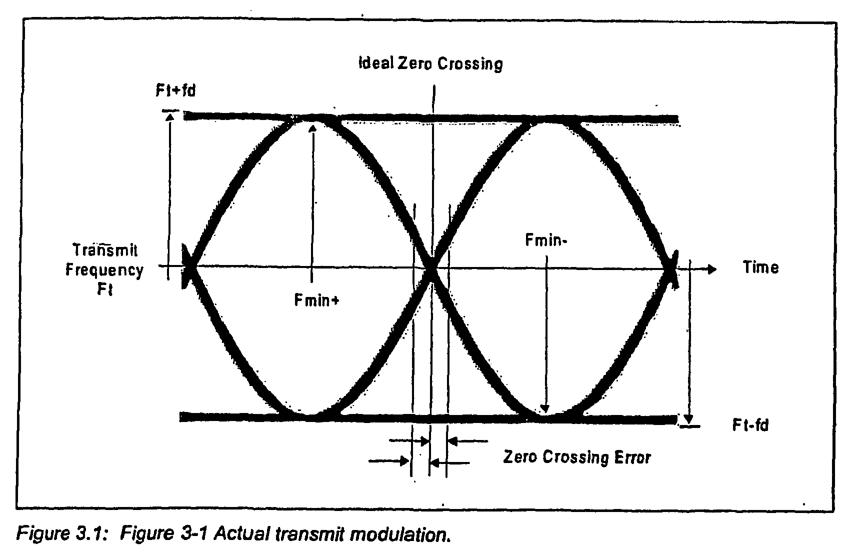

For each transmit channel, the minimum frequency deviation (Fmin = the lesser of {Fmin+, Fmin-}) which corresponds to 1010 sequence shall be no smaller than ±80% of the frequency deviation (fd) which corresponds to a 00001111 sequence. In addition, the minimum deviation shall never be smaller than 115 kHz. The data transmitted has a symbol rate of 1 Ms/s.

The zero crossing error is the time difference between the ideal symbol period and the measured crossing time. This shall be less than ± 1/8 of a symbol period.

### 3.2 SPURIOUS EMISSIONS

The spurious emission, in-band and out-of-band, is measured with a frequency hopping transmitter hopping on a single frequency; this means that the synthesizer must change frequency between receive slot and transmit slot, but always returns to the same transmit frequency.

For the USA, FCC parts 15.247, 15.249, 15.205 and 15.209 are applicable regulations. For Japan, RCR STD-33 applies and, for Europe, ETSI 300 328.

### 3.2.1 In-band Spurious Emission

Within the ISM band the transmitter shall pass a spectrum mask, given in Table 3.2. The spectrum must comply with the FCC's 20-dB bandwidth definition and should be measured accordingly. In addition to the FCC requirement an adjacent channel power on adjacent channels with a difference in channel number of two or greater an adjacent channel power is defined. This adjacent channel power is defined as the sum of the measured power in a 1 MHz channel. The transmitted power shall be measured in a 100 kHz.bandwidth using maximum hold. The transmitter is transmitting on channel M and the adjacent channel power is measured on channel number N. The transmitter is sending a pseudo random data pattern throughout the test.

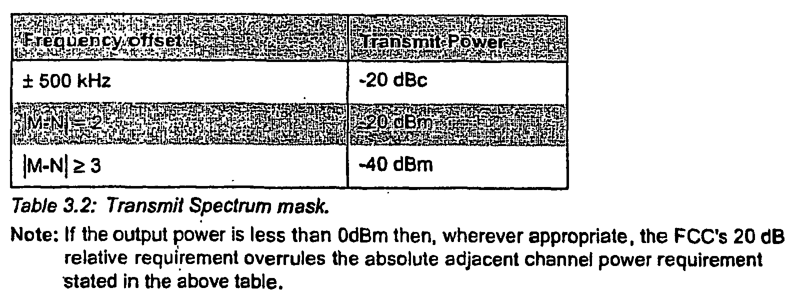

Exceptions are allowed in up to three bands of 1 MHz width centered on a frequency which is an integer multiple of 1 MHz. They must, however, comply with an absolute value of -20 dBm.

### 3.2.2 Out-of-Band Spurious Emission

The measured power should be measured in a 100 kHz bandwidth.

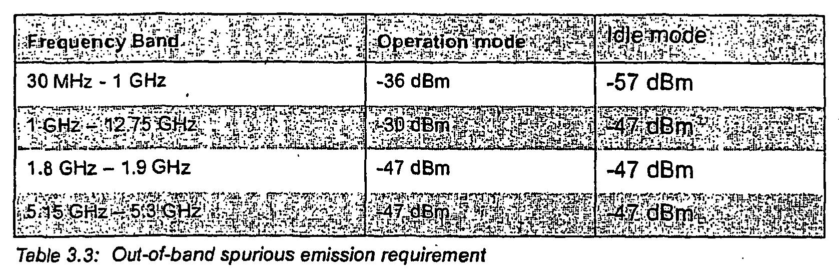

### 3.3 RADIO FREQUENCY TOLERANCE

The transmitted initial center frequency accuracy must be ±75 kHz from F_{c}. The initial frequency accuracy is defined as being the frequency accuracy before any information is transmitted. Note that the frequency drift requirement is not included in the ±75 kHz.

The transmitter center frequency drift in a packet is specified in Table 3.4. The different packets are defined in the Baseband Specification.

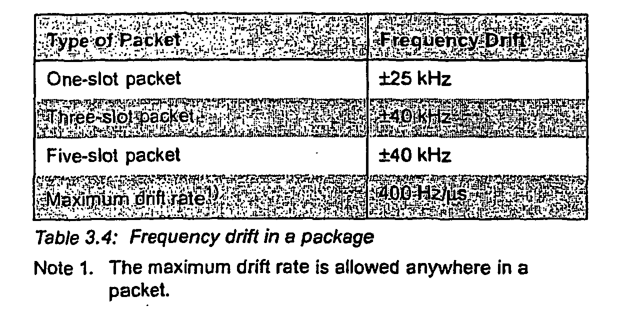

### 4 RECEIVER CHARACTERISTICS

In order to measure the bit error rate performance; the equipment must have a "loop back" facility. The equipment sends back the decoded information. This facility is specified in the Test Mode Specification.

The reference sensitivity level referred to in this chapter equals -70 dBm.

### 4.1 ACTUAL SENSITIVITY LEVEL

The actual sensitivity level is defined as the input level for which a raw bit error rate (BER) of 0.1 % is met. The requirement for a Bluetooth receiver is an actual sensitivity level of -70 dBm or better. The receiver must achieve the -70 dBm sensitivity level with any Bluetooth transmitter compliant to the transmitter specification specified in Section 3 on page 21.

### 4.2 INTERFERENCE PERFORMANCE

The interference performance on Co-channel and adjacent 1 MHz and 2-MHz are measured with the wanted signal 10 dB over the reference sensitivity level. On all other frequencies the wanted signal shall be 3 dB over the reference sensitivity level. Should the frequency of an interfering signal lie outside of the band 2400-2497 MHz, the out-of-band blocking specification (see Section 4.3 on page 26) shall apply. The interfering signal shall be Bluetooth-modulated (see section 4.8 on page 28). The BER shall be ≤ 0.1%. The signal to interference ratio shall be:

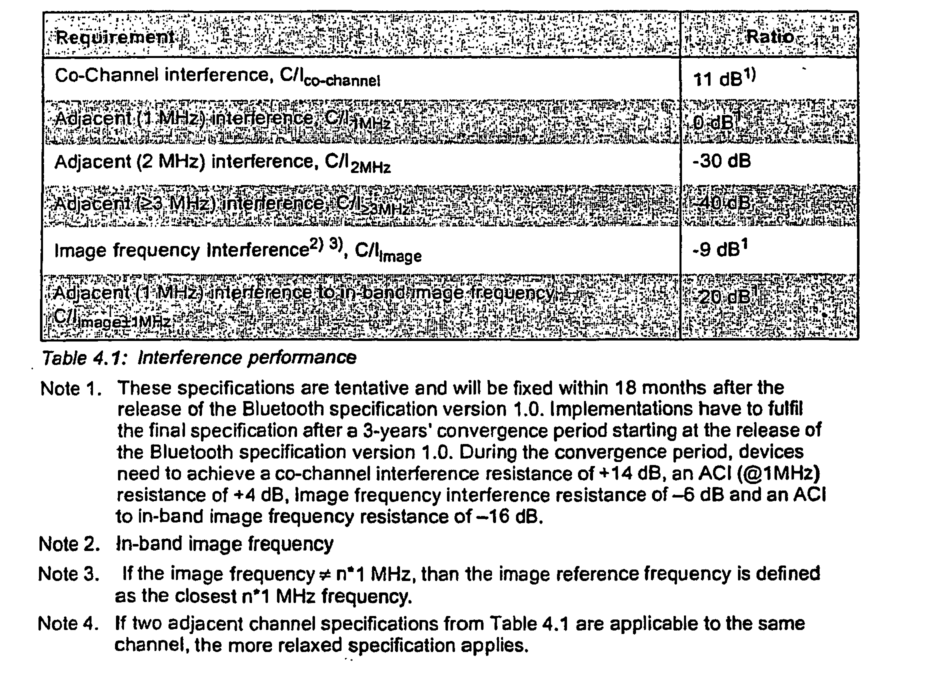

These specifications are only to be tested at nominal temperature conditions with a receiver hopping on one frequency, meaning that the synthesizer must change frequency between receive slot and transmit slot, but always return to the same receive frequency.

Frequencies where the requirements are not met are called spurious response frequencies. Five spurious response frequencies are allowed at frequencies with a distance of ≥ 2 MHz from the wanted signal. On these spurious response frequencies a relaxed interference requirement C/I = -17 dB shall be met.

### 4.3 OUT-OF-BAND BLOCKING

The Out of band blocking is measured with the wanted signal 3 dB over the reference sensitivity level. The interfering signal shall be a continuous wave signal. The BER shall be ≤ 0.1%. The Out of band blocking shall fulfil the following requirements:

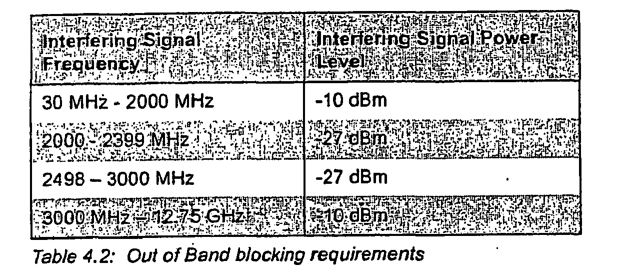

24 exceptions are permitted which are dependent upon the given receive channel frequency and are centered at a frequency which is an integer multiple of 1 MHz. At 19 of these spurious response frequencies a relaxed power level -50 dBm of the interferer may used to achieve a BER of 0.1%. At the remaining 5 spurious response frequencies the power level is arbitrary.

### 4.4 INTERMODULATION CHARACTERISTICS

The reference sensitivity performance, BER = 0.1%, shall be met under the following conditions.
- The wanted signal at frequency f₀ with a power level 6 dB over the reference sensitivity level.
- A static sine wave signal at f₁ with a power level of-39 dBm
- A Bluetooth modulated signal (see Section 4.8 on page 28) at f₂ with a power level of -39 dBm

Such that f₀=2f₁-f₂ and |f₂-f₁ |=n*1 MHz, where n can be 3, 4, or 5. The system must fulfil one of the three alternatives.

### 4.5 MAXIMUM USABLE LEVEL

The maximum usable input level the receiver shall operate at shall be better than-20 dBm. The BER shall be less or equal to 0,1 % at -20* dBm input power.

### 4.6 SPURIOUS EMISSIONS

The spurious emission for a Bluetooth receiver shall not be more than:

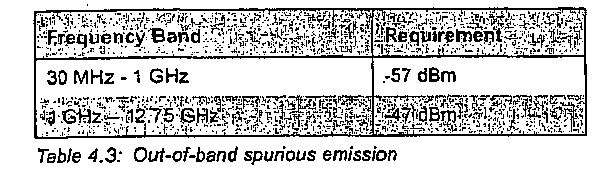

The measured power should be measured in a 100 kHz bandwidth.

### 4.7 RECEIVER SIGNAL STRENGTH INDICATOR (OPTIONAL)

A transceiver that wishes to support power-controlled links must be able to measure the strength of the received signal and determine if the transmitter on the other side of the link should increase or decrease its output power level. A Receiver Signal Strength Indicator (RSSI) makes this possible.

The RSSI measurement compares the received signal power with two threshold levels, which define the Golden Receives Power Range. The lower threshold level corresponds to a received power between -56 dBm and 6 dB above the actual sensitivity of the receiver. The upper threshold level is 20 dB above the lower threshold level to an accuracy of +/- 6 dB (see Figure 4.1 on page 27).

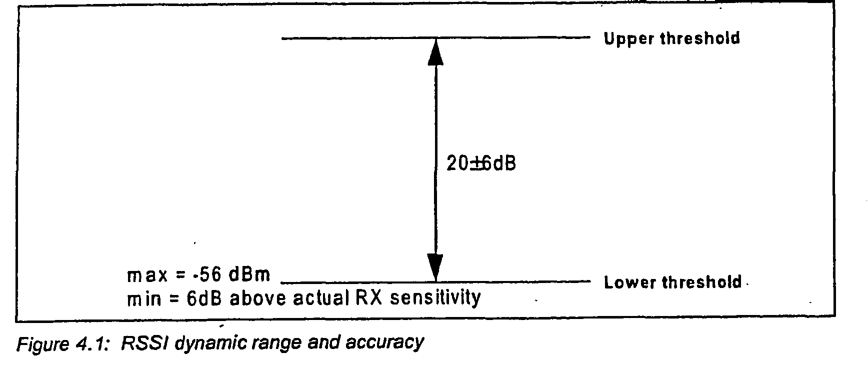

### 4.8 REFERENCE SIGNAL DEFINITION

A Bluetooth modulated interfering signal is defined as:
Modulation = GFSK
Modulation index = 0.32±1%
BT= 0.5±1%
Bit Rate = 1 Mbps ±1 ppm
Modulating Data for wanted signal = PRBS9
Modulating Data for interfering signal = PRBS 15
Frequency accuracy better than ±1 ppm.

### 5 APPENDIX A

### 5.1 NOMINAL TEST CONDITIONS (NTC)

### 5.1.1 Nominal temperature

The nominal temperature conditions for tests shall be +15 to +35 °C. When it is impractical to carry out the test under this condition a note to this effect, stating the ambient temperature, shall be recorded. The actual value during the test shall be recorded in the test report.

### 5.1.2 Nominal Power source

### 5.1.2.1 Mains Voltage

The nominal test voltage for equipment to be connected to the mains shall be the nominal mains voltage. The nominal voltage shall be declared voltage or any of the declared voltages for which the equipment was designed. The frequency of the test power source corresponding to the AC mains shall be within 2% of the nominal frequency.

### 5.1. 2.2 Lead-acid battery power sources used in vehicles

When radio equipment is intended for operation from the alternator-fed lead-acid battery power sources which are standard in vehicles, then the nominal test voltage shall be 1.1 times the nominal voltage of the battery (6V, 12V, etc.).

### 5.1.2.3 Other power sources

For operation from other power sources or types of battery (primary or secondary), the nominal test voltage shall be as declared by the equipment manufacturer. This shall be recorded in the test report.

### 5.2 EXTREME TEST CONDITIONS

### 5.2.1 Extreme temperatures

The extreme temperature range is defined as the largest temperature range given by the combination of:
- The minimum temperature range 0 °C to +35 °C
- The product operating temperature range declared by the manufacturer. This extreme temperature range and the declared operating temperature range shall be recorded in the test report.

### 5.2.2 Extreme power source voltages

Tests at extreme power source voltages specified below are not required when the equipment under test is designed for operation as part of and powered by another system or piece of equipment. Where this is the case, the limit values of the host system or host equipment shall apply. The appropriate limit values shall be declared by the manufacturer and recorded in the test report.

### 5.2.2.1 Mains voltages

The extreme test voltage for equipment to be connected to an AC mains source shall be the nominal mains voltage ±10%.

### 5.2.2.2 Lead-acid battery power source used on vehicles

When radio equipment is intended for operation from the alternator-fed lead-acid battery power sources which are standard in vehicles, then extreme test voltage shall be 1.3 and 0.9 times the nominal voltage of the battery (6V, 12V etc.)

### 5.2.2.3 Power sources using other types of batteries

The lower extreme test voltage for equipment with power sources using the following types of battery, shall be
a) for Leclanché, alkaline, or lithium type battery: 0.85 times the nominal voltage of the battery
b) for the mercury or nickel-cadmium types of battery: 0.9 times the nominal voltage of the battery.

In both cases, the upper extreme test voltage shall be 1.15 times the nominal voltage of the battery.

### 5.2.2.4 Other power sources

For equipment using other power sources, or capable of being operated from a variety of power sources (primary or secondary), the extreme test voltages shall be those declared by the manufacturer. These shall be recorded in the test report.

### 6 APPENDIX B

The Radio parameters shall be tested in the following conditions

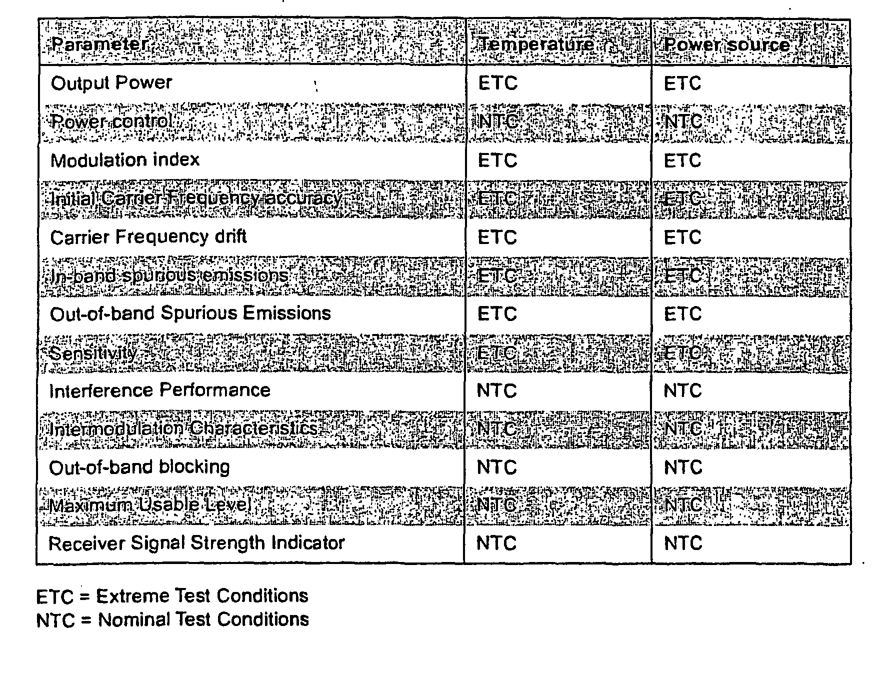

## Claims

1. An eyewear (12) comprising:
a frame (24) and a pair of temples (19, 20) hingedly attached to said frame; hinge means (28) having one portion attached to said frame (24) and another portion pivotally mounted on a hinge pin (150) **characterised in that**
a Bluetooth transceiver (18) for short-distance wireless communication is embedded in at least one of said temples wherein said Bluetooth transceiver is configured to form an ad hoc wireless network with a plurality of devices; (14, 16, 17), electrically conductive male and female connectors (30, 32) are connected to one of said another portion of said hinge means and one of said temples, wherein said temple is releasably attached to said frame by said male and female connectors to also provide electrical contact therebetween, and wherein a plurality of temples may be used.

2. The eyewear of claim 1 wherein the female connector is secured to said another portion of said hinge and said male connector is secured to said temple.

3. The eyewear of claim 1 or 2 wherein the communication between said transceiver and said devices is via signals conforming to the Bluetooth standard.

4. The eyewear of any preceding claim wherein any one of said transceiver and said devices can be configured to be a master or a slave in a master-slave configuration.

5. The eyewear of any preceding claim wherein said devices are mobile devices.

6. The eyewear of claim 5 wherein said mobile devices are chosen from a group consisting of a phone (16), a computer (14), a radio, a compact disc player (58), a camera, a distance alarm, a heart rate monitor (66) and a hand held global positioning satellite system (74).

7. The eyewear of claim 5 or 6 wherein said devices are located in the range of one hundred meters or less.

8. The eyewear of any preceding claim wherein said transceiver automatically changes the output power to adjust the range of transmission to exactly the required range.

9. The eyewear of any preceding claim wherein said transceiver and said devices each have a clock, and said clocks are automatically synchronized with one of said clocks that is a designated master clock.

10. The eyewear of any preceding claim wherein said transceiver can communicate with only those devices that are preset to communicate with said transceiver.

11. The eyewear of any preceding claim wherein said transceiver is arranged to work in a noisy radio environment, and is audible under severe conditions.

12. The eyewear of any preceding claim further comprising:
apparatus (36) attached to one or more of said temples or said frame, said apparatus being selected from a group consisting of an audio device having a speaker and a microphone, a camera, a display device, a distance alarm and an ear bud.

13. The eyewear of any preceding claim further comprising;
a first pad (42, 44) located in said frame (24); and
a second pad (46, 48) located on an associated said temple;
wherein said first pad and said second pad contact each other when said temple is in open position, thereby establishing an electrical connection.

14. The eyewear of any preceding claim wherein each said temple is attached to said frame to substantially hide from view said connector and said hinge.

15. The eyewear of any preceding claim further comprising:
an on off switch (50), said switch being located on one of said temples.

16. The eyewear of claim 12 wherein at least a portion of said apparatus is embedded in said temple.

17. The eyewear of claim 16 further comprising:
conductors, said conductors being embedded in said temples and said frame and said conductor being arranged to establish electrical connection between different components of said apparatus.

18. The eyewear of claim 6 wherein the distance alarm is arranged to trigger generation of an alarm signal when said alarm exceeds a predetermined distance from said eyewear.

19. The eyewear of claim 18 wherein said distance at which the alarm signal is generated is arranged to be set by the user.

20. The eyewear of claim 18 wherein said generated alarm signal is one of a visual, a vibratory and an audible alarm.

## Patentansprüche

1. Brille (12), welche Folgendes beinhaltet:
a) ein Brillengestell (24) und ein Paar von Bügeln (19,20), die drehgelenkig an dem Brillengestell (24) befestigt sind;
b) Gefenkbauteile (28), welche mit einem Teil an dem Brillengestell (24) befestigt sind und mit einem anderen Teil drehbar an einem Gelenkbolzen (150) montiert sind;
**dadurch gekennzeichnet, dass**
c) ein Bluetooth Sende-/Empfangsgerät (18) für drahtlose Kurzstrecken-Kommunikation in wenigstens einem der Bügel eingebaut ist, wobei das Bluetooth Sende-/Empfangsgerät dazu ausgebildet ist, ein drahtlose ad-hoc Netzwerk mit einer Vielzahl von Vorrichtungen (14,16,17) zu bilden; elektrisch leitende Stecker und Anschlussbuchsen (30,32) mit einem der anderen Teile des Gelenkbautells und einem der Bügel verbunden sind, wobei der Bügel durch die Stecker und Anschlussbuchsen lösbar an dem Brillengestell befestigt ist, um ebenso elektrischen Kontakt zwischen diesen zu ermöglichen, und wobei eine Vielzahl von Bügeln genutzt werden kann.

2. Brille nach Anspruch 1, wobei die Anschlussbuchse an dem anderen Teil des Gelenkbautells befestigt ist und der Stecker an dem Bügel befestigt ist.

3. Brille nach Anspruch oder 2, wobei die Kommunikation zwischen dem Sende-/Empfangsgerät mittels Signalen gemäß dem Bluetooth Standard stattfindet.

4. Brille nach einem der vorangehenden. Ansprüche, wobei das Sende-/Empfangsgerät und/oder eine der Vorrichtungen als Master oder Slave in einer Master-Slave-Konfiguration eingerichtet werden kann.

5. Brille nach einem der vorangehenden Ansprüche, wobei die Vorrichtungen mobile Vorrichtungen sind.

6. Brille nach Anspruch 5, wobei die mobilen Vorrichtungen aus einer Gruppe ausgewählt sind, die aus einem Telefon, einem Computer, einem Radio, einem Compact Disc Player, einer Kamera, einem Abstands-Warnmelder, einem Herz-Frequenz-Überwachungsgerät und einem tragbaren Gerät zur Nutzung eines satellitenbasierten globalen Positions-Systems besteht.

7. Brille nach Anspruch 5 oder 6, wobei die Vorrichtungen in einem Bereich von einhundert Metern oder weniger angeordnet sind.

8. Brille nach einem der vorangehenden Ansprüche, wobei das Sende-/Empfangsgerät automatisch die Ausgangsleistung ändert, um den Übertragungsbereich exakt an den benötigten Bereich anzupassen.

9. Brille nach einem der vorangehenden Ansprüche, wobei das Sende-/Empfangsgerät und die Vorrichtungen eine Uhr aufweisen, und die Uhren automatisch mit einer der Uhren, die als Master-Uhr festgelegt ist, synchronisiert werden.

10. Brille nach einem der vorangehenden Ansprüche, wobei das Sende-/Empfangsgerät nur mit den Vorrichtungen kommunizieren kann, die zur Kommunikation mit dem Sende-/Empfangsgerät voreingestellt sind.

11. Brille nach einem der vorangehenden Ansprüche, wobei das Sende-/Empfangsgerät dazu ausgebildet ist, in einer verrauschten Funk-Umgebung zu arbeiten und unter schwierigen Bedingungen vernehmbar zu sein.

12. Brille nach einem der vorangehenden Ansprüche, die weiterhin Folgendes beinhaltet;
eine Vorrichtung (36), die an einem oder mehreren Bügeln oder dem Brillengestell befestigt ist, wobei die Vorrichtung aus einer Gruppe ausgewählt ist, die aus einer Audio-Vorrichtung mit einem Lautsprecher und einem Mikrophon, einer Kamera, einer Anzeige-Vorrichtung, einem Abstands-Wammelder und einem Ohr-Knopf besteht.

13. Brille nach einem der vorangehenden Ansprüche, die weiterhin Folgendes beinhaltet,
a. ein erstes Kontaktfeld (42,44), das an dem Brillengestell (24) angeordnet ist; und
b. ein zweites Kontaktfeld (46,48), das an einem zugeordneten Bügel angeordnet ist;
c. wobei das erste Kontaktfeld und das zweite Kontaktfeld einander kontaktieren, wenn der Bügel in einer offenen Position ist, so dass eine elektrische Verbindung aufgebaut wird.

14. Brille nach einem der vorangehenden Ansprüche, wobei jeder Bügel so mit dem Brillengestell verbunden ist, dass die Verbinder und das Gelenk im Wesentlichen nicht sichtbar sind.

15. Brille nach einem der vorangehenden Ansprüche, die weiterhin Folgendes beinhaltet:
einen Ein-/Ausschalter (50), wobei der Schalter an einem der Bügel angeordnet ist.

16. brille nach Anspruch 12, wobei wenigstens ein Teil der Vorrichtung in dem Bügel eingebettet ist.

17. Brille nach Anspruch 16, die weiterhin Folgendes aufweist:
a. Leiterbahnen, die in den Bügeln und dem Brillengestell eingebettet sind, wobei die Leiterbahnen zur Ausbildung elektrischer Verbindungen zwischen den unterschiedlichen Komponenten der Vorrichtung ausgebildet sind.

18. Brille nach Anspruch 6, wobei der Abstands-Warnmelder dazu ausgebildet ist, die Erzeugung eines Alarmsignals auszulösen, wenn der Abstand einen vorbestimmten Abstand von der Brille überschreitet.

19. Brille nach Anspruch 18, wobei der Abstand, bei dem der Alarm erzeugt wird, durch den Benutzer festgelegt werden kann.

20. Brille nach Anspruch 18, wobei das erzeugte Alarmsignal entweder ein visueller, ein vibrierender oder ein hörbarer Alarm ist.

## Revendications

1. Article de lunetterie (12) comprenant :
- un cadre (24) et une paire de branches (19,20) attachée de manière articulée audit cadre ; des moyens d'articulations (28) ayant une portion attachée audit cadre (24) et une autre portion pivotante sur un axe d'articulation (150) **caractérisé en ce que**
l'émetteur-récepteur Bluetooth (18) pour une communication sans fil courte distance est incorporé dans au moins une desdites branches dans lequel ledit émetteur-récepteur Bluetooth est configuré pour former un réseau sans fil ad hoc avec une pluralité de dispositifs (14, 16, 17), des connecteurs mâle et femelle conducteurs électriques (30, 32) sont connectés à l'une desdites autres portions desdits moyens d'articulations et de l'une desdites branches, ladite branche étant attachée de manière détachable audit cadre par lesdits connecteurs mâle et femelle pour fournir également un contact électrique entre ceux-ci, et une pluralité de branches pouvant être utilisées.

2. Article de lunetterie selon la revendication 1 dans lequel le connecteur femelle est fixé à ladite autre portion de ladite articulation est ledit connecteur mâle est fixé à ladite branche.

3. Article de lunetterie selon la revendication 1 ou 2 dans lequel la communication entre ledit émetteur-récepteur et lesdits dispositifs est faite par des signaux conformes au standard Bluetooth.

4. Article de lunetterie selon l'une des revendications précédentes dans lequel l'un quelconque dudit émetteur-récepteur et dudit dispositif peut être configuré pour être un maître ou un esclave dans une configuration maitre-esclave.

5. Article de lunetterie selon l'une quelconque des revendications précédentes dans lequel lesdits dispositifs sont des dispositifs mobiles.

6. Article de lunetterie selon la revendication 5 dans lequel lesdits dispositifs mobiles sont choisis parmi un groupe consistant en un téléphone (16), un ordinateur (14), une radio, un lecteur de disque compact (58), un appareil photo, une alarme à distance, un dispositif de surveillance de fréquence cardiaque (66) et un dispositif de localisation par satellite portable (74).

7. Article de lunetterie selon la revendication 5 ou 6 dans lequel lesdits dispositifs sont situés à une distance de cent mètres ou moins.

8. Article de lunetterie selon l'une quelconque des revendications précédentes dans lequel ledit émetteur-récepteur change automatiquement la puissance de sortie pour ajuster la distance de transmission à exactement la distance requise.

9. Article de lunetterie selon l'une quelconque des revendications précédentes dans lequel ledit émetteur-récepteur et lesdits dispositifs ont chacun une horloge, et en ce que lesdites horloges sont automatiquement synchronisées avec l'une desdites horloges qui est une horloge maître désignée.

10. Article de lunetterie selon l'une quelconque des revendications précédentes dans lequel ledit émetteur-récepteur peut uniquement communiquer avec ceux des dispositifs qui sont préréglés pour communiquer avec ledit émetteur-récepteur.

11. Article de lunetterie selon l'une quelconque des revendications précédentes dans lequel ledit émetteur-récepteur est agencé pour travailler dans un environnement radio bruité, et être audible dans des conditions difficiles.

12. Article de lunetterie selon l'une des revendications précédentes comprenant en outre :
- un appareil (36) attaché à un ou plusieurs éléments parmi lesdites branches ou ledit cadre, ledit appareil étant choisi parmi un groupe constitué d'un dispositif audio ayant un haut parleur et un microphone, un appareil photo, un dispositif d'affichage, une alarme à distance et un écouteur bouton.

13. Article de lunetterie selon l'une quelconque des revendications précédentes comprenant en outre :
- un premier tampon (42, 44) situé dans ledit cadre (24) ; et
- un deuxième tampon (46, 48) situé sur une dite branche associée ; dans lequel ledit premier tampon et ledit deuxième tampon entrent en contact l'un avec l'autre lorsque ladite branche est dans une position ouverte, établissant ainsi une connexion électrique.

14. Article de lunetterie selon l'une des revendications précédentes dans lequel chacune desdites branches est attachée audit cadre pour cacher sensiblement la vue dudit connecteur et de ladite articulation.

15. Article de lunetterie selon l'une quelconque des revendications précédentes comprenant en outre :
- un commutateur ouvert-fermé (55), ledit commutateur étant situé sur l'une desdites branches.

16. Article de lunetterie selon la revendication 12 dans lequel au moins une portion dudit appareil est incorporée dans ladite branche.

17. Article de lunetterie selon la revendication 16 comprenant en outre :
- des conducteur, lesdits: conducteur étant incorporés dans lesdites branches et ledit cadre et ledit conducteur étant agencé pour établir une connexion électrique entre différents composants dudit appareil.

18. Article de lunetterie selon la revendication 6, dans lequel l'alarme à distance est agencée pour déclencher la génération d'un signal d'alarme lorsque ladite alarme excède une distance prédéterminée dudit article de lunetterie.

19. Article de lunetterie selon la revendication 18 dans lequel ladite distance à laquelle le signal d'alarme est est agencée pour être définie par l'utilisateur.

20. Article de lunetterie selon la revendication 18 dans lequel ledit signal d'alarme généré est l'un parmi une alarme visuelle, vibratoire et audible.
